# EUROPEAN PATENT APPLICATION

(11) **EP 2 273 373 A1**
(43) Date of publication of application: **12.01.2011**
(21) Application number: 09008672.9
(22) Date of filing: 02.07.2009
(51) Int. Cl.: G06F 12/02, G06F 12/12

(54) **Storing of frequently modified data in an IC card**

(71) Applicant: Vodafone Holding GmbH, 40213 Düsseldorf (DE)
(72) Inventor: Hoeksel, Sebastiaan, Maastricht, 6229 VN (NL); Koraichi, Najib, 6333, CT Schimmert (NL); Waters, Patrick H., SP5 2HN Redlynch Salisbury (GB)
(74) Representative: Jostarndt, Hans-Dieter

(57) **Abstract**

The invention aims at extending the service life of an IC card, which is limited because data is stored and modified in non-volatile memory of the IC card, which allows only a limited number of erase/write cycles. The invention suggests a method for storing data in an IC card (101), which is connectable to a host device (102). The IC card (101) includes a microcontroller (104) comprising a memory for storing data elements modified by a data processing program, when the IC card (101) is operated. The memory includes at least one non-volatile memory unit (111; 113) and at least one volatile memory unit (110). In the method at least one first data element is determined, which is modified more frequently than at least one second data elements, and wherein the first data element is stored and modified in the volatile memory unit (110) in response to the rate of modifications of the first data element. Furthermore, the invention suggests an IC card (101) for executing the method.

## Description

The invention relates to the storing of data in an integrated circuit (IC) card. More specifically, the invention is related to an IC card for storing data and to a method for storing data in an IC card.

IC cards are pocket sized cards for connecting to a host device. The cards comprise an integrated programmable microcontroller for storing and processing data. The microcontroller may be especially secured against tampering so that IC cards can be used in security-related areas. One example of an IC card is an identification module card, which can be connected to a mobile communication device and comprises applications and data for identifying and authenticating the mobile communication device or its user in a mobile communication network. In addition to identification and authentication data, the identification module card particularly also stores parameters used in the operation of the mobile communication device in a mobile communication network, such as for example, parameters concerning the location of the mobile communication device in the mobile communication network and cryptographic keys used for encrypting and decrypting data that are exchanged between the mobile communication device and the mobile communication network.

Usually, data, which are managed and/or used by data processing applications of an IC card or a host device, are stored in a non-volatile memory of the IC card, i.e. a memory retaining the stored information when not supplied with power. This non-volatile memory may be configured as EEPROM (electrically erasable programmable read-only memory) or as Flash memory for example. However, in contrast to volatile memory, such as RAM (random access memory), the number of times a single memory location can be rewritten is limited in non-volatile memory. Typically, non-volatile memory allows a number of erase/write cycles of a memory location in the range of 10.000-100.000. When the maximum number of erase/write cycles is reached the same memory location can not reliably be written anymore.

Since a modification of a data element in the non-volatile memory corresponds to one erase/write cycle, the service life of the non-volatile memory and the whole IC card is determined by the most frequently modified data elements stored in the IC card. Thus, when the IC cards stores data elements that are modified frequently, the service life of the IC card is significantly reduced.

Especially, identification module cards used in mobile communications may suffer from this reduction of the service life, since the aforementioned parameters relating to the location of the mobile communication device in the mobile communication network are frequently updated when the mobile communication device changes its location with a higher speed.

Therefore, it is an object of the present invention to extend the service life of a memory of an IC card having frequently-modified data stored therein.

The object is achieved by a method according to claim 1 and by an IC card according to claim 14. Embodiments of the method and the IC card are given in the dependent claims.

According to a first aspect, the invention suggests a method for storing data in an IC card, which is connectable to a host device. The IC card includes a microcontroller comprising a memory for storing data elements modified by a data processing program, when the IC card is operated. The memory includes at least one non-volatile memory unit and at least one volatile memory unit. In the method at least one first data element is determined, which is modified more frequently than at least one second data elements, and wherein the first data element is stored and modified in the volatile memory unit.

According to a second aspect, the invention suggests an IC card comprising a microcontroller with a memory for storing data elements modified by a data processing program. The memory includes at least one non-volatile memory unit and at least one volatile memory unit. During operation of the data processing program, at least one first data element is stored and modified in the volatile memory unit and at least one second data element is stored and modified in the non-volatile memory unit, the first data element being modified more frequently than the second data element.

The data processing program may be any computer program capable of modifying data stored in an IC card. The data processing program may be executed in the IC card. However, it is likewise possible that the data processing program is executed in the host device to which the IC card can be connected.

The invention involves the idea to store and modify frequently modified data elements in a volatile memory unit of the IC card. The volatile memory unit allows unlimited erase/write cycles so that the service life of the IC card is not affected by modifications of the frequently modified data elements. Thus, the service life of the memory of the IC card is extended, and the longer service life of the memory leads to an extended service life of the whole IC card.

In one embodiment of the method and the IC card, the second data element is stored and modified in the non-volatile memory unit. This embodiment involves the idea that less frequently modified data elements are stored and modified in the non-volatile memory unit. Modifications of such data elements barely reduce the service life of the IC card. Furthermore, non-volatile memory occupies a smaller area than volatile memory. Thus, the additional memory area can be kept at a minimum, when the less frequently modified data elements are stored in the non-volatile memory unit.

In a further embodiment of the method and the IC card, the microcontroller can be supplied with power by the host device and the IC card comprises a power supply means, the power supply means supplying the volatile memory unit with power, when the power connection to the host device is disconnected. In this embodiment it is ensured that the frequently modified data elements stored in the volatile memory unit are not deleted, when the IC card is disconnected from the power supply by the host device. Preferably, the power supply means may be capable of supplying power to the volatile memory unit at least temporarily for a certain shorter period of time after the external power supply by the host device is disconnected from the IC card. It may also be possible that the power supply means can supply power to the volatile memory unit over a longer period of time so that the frequently modified data may be retained in the volatile memory unit during absence of the external supply. In addition, the power supply means may be capable of supplying power to the microcontroller of the IC card in such a way that the microcontroller is enabled to execute and/or control processes and applications.

Preferably, the power supply means is rechargeable and is charged, while the microcontroller is supplied with power by the host device. This ensures that the power supply means does not have to be replaced after exhaustion. An example of such a rechargeable power supply means is a rechargeable battery, which may be integrated into the IC card.

When the frequently modified data elements are retained in the volatile memory unit during absence of the external power supply of the IC card, there is a risk that the data elements are deleted when the power supply means of the IC card, which powers the volatile memory unit, is exhausted. In order to prevent such loss of data, the data elements stored in the volatile memory unit may be backed up in the non-volatile memory unit of the IC card. This allows for restoring the data elements in the volatile memory unit after they have been deleted therein. Also, since the backup rate can be chosen lower than the modification rate of the frequently modified parameters, the number of write processes in the non-volatile can still be significantly reduced.

In one embodiment of the method and the IC card, the first data element is stored in the non-volatile memory unit in predetermined time intervals. Preferably, the time intervals are longer than the typical time intervals in which the first data element is modified so that the number of write processes in the non-volatile memory unit is reduced. The storing of the frequently modified data elements in the non-volatile memory unit is controlled and executed by a memory management program executed in the microcontroller of the IC card, which is supplied with power by means of the internal power supply means of the IC card for this purpose when the external power supply is not available.

In a further embodiment of the method and the IC card, the state of charge of the power supply means is determined, and the first data element is stored in the non-volatile memory unit when the state of charge is below a predetermined threshold. It is an advantage of this embodiment that frequently modified data elements are only stored in the non-volatile memory unit, if necessary. Therefore, the number of write processes in the non-volatile memory unit is further reduced. A drop of the state of charge of the power supply means below the threshold may only occur, when the IC card is disconnected from the power supply by the host device. Otherwise, the host device provides the microcontroller of the IC card with power and the power supply means is not discharged. Preferably, the storing of the data elements in the non-volatile memory unit is again controlled and executed by means of the memory management program executed in the microcontroller of the IC card, while the microcontroller is power by the internal power supply means of the IC card. The threshold of the state of charge may be chosen in such a way that the power supply means is still capable of providing enough energy for the storing of the data elements in the non-volatile memory unit. The program may also determine the state of charge of the power supply means and the microcontroller may be supplied with power by the power supply means for executing the program.

As an alternative to the embodiments described before, the frequently modified data elements may only be stored in the volatile memory unit during a card session, i.e. when there is an activated link between the IC card and the host device and when the data elements are being used. Therefore, in one embodiment of the method and the IC card, the first data element is stored in the non-volatile memory unit in response to a termination of the data processing program and/or in response to a termination of the power supply of the microcontroller by the host device. It is an advantage of this embodiment that no data has to be retained in the volatile memory unit, when the IC card is not being used. Thus, no power needs to be provided during this time so that the internal power supply means of the IC card may be dispensed with, or its capacity may be reduced. Furthermore, any data loss can be prevented, since the data elements retained in the non-volatile memory unit can include the latest modifications, when the data elements are stored in the non-volatile memory unit in response to a termination of the data processing program and/or in response to a termination of the power supply of the microcontroller by the host device.

The internal power supply may be used, if the frequently modified data need to be stored in the non-volatile memory unit, when the microcontroller cannot be operated using the external power supply by the host device. Therefore, one embodiment of the method and the IC card provides that the microcontroller is supplied with power by the power supply means, while the first data elements is being stored in the non-volatile memory unit after the power supply by the host device has been terminated. This ensures that the storing of the data elements in the non-volatile memory unit can be done after the external power supply of the IC card is disconnected and, thus, after the last modification of the data elements has been done.

In a further embodiment of the method and the IC card, the first data element is read from the non-volatile memory unit and stored in the volatile memory unit in response to a start of the data processing program and/or in response to an activation of the IC card by the host device. It is an advantage of this embodiment that the frequently modified data elements, which have been retained in the non-volatile memory unit, are restored in the volatile memory unit, when they are to be used. After the restoration, modifications of the data elements may be done in the volatile memory unit.

It may be fixedly predetermined which data element or data elements are stored and modified in the volatile memory unit and which data element or data elements are stored and modified in the non-volatile memory unit. This may be done based on knowledge of the usual behaviour of the data processing program. As an alternative, it may be determined dynamically, which data elements are frequently modified so that they are to be stored and modified in the volatile memory unit. Therefore, in one embodiment of the method and the IC card, the first data element is determined during an operation of the microcontroller by determining a number of modifications of the first data element in a predetermined time interval or by determining a number of events representative of a high modification rate of the first data element. If the number of modifications of the first data element in a predetermined time interval or the number of events representative of a high modification rate of the first data element exceeds a predetermined threshold, it may be judged that the first data element is stored in the volatile memory unit.

In one embodiment of the method and the IC card, the IC card comprises a user identification module for identifying and/or authenticating a user in a mobile communication network, the identification module managing data related to the operation of the host device in a cellular mobile communication network. In this embodiment, the host device may be configured as a mobile communication device. The user identification module provides resources, such as services and/or data, for identifying and/or authenticating a user of a mobile communication device in the mobile communication network. For instance, if the mobile communication network is configured as a GSM network (GSM: Global System for Mobile Communications), the user identification module may be configured as a SIM (SIM: Subscriber Identification Module) according to the GSM specification. If the mobile communication network is configured as a UMTS network (UMTS: Universal Mobile Telecommunications System), the user identification module may be configured as a USIM (Universal Subscriber Identification Module) application according to the UMTS specification.

As already described above, such a user identification module usually also manages data, which may be modified frequently due to changes of the configuration of the host device in the mobile communication network. For instance, frequently switching on and off of the host device or activating and deactivating network bearer services may result in frequent changes of the configuration of the host device in the mobile communication network. In particular, the changes of the configuration may be due to so called location update procedures.

In a further embodiment of the method and the IC card, the volatile memory unit is RAM and wherein the non-volatile memory unit includes EEPROM and/or Flash memory.

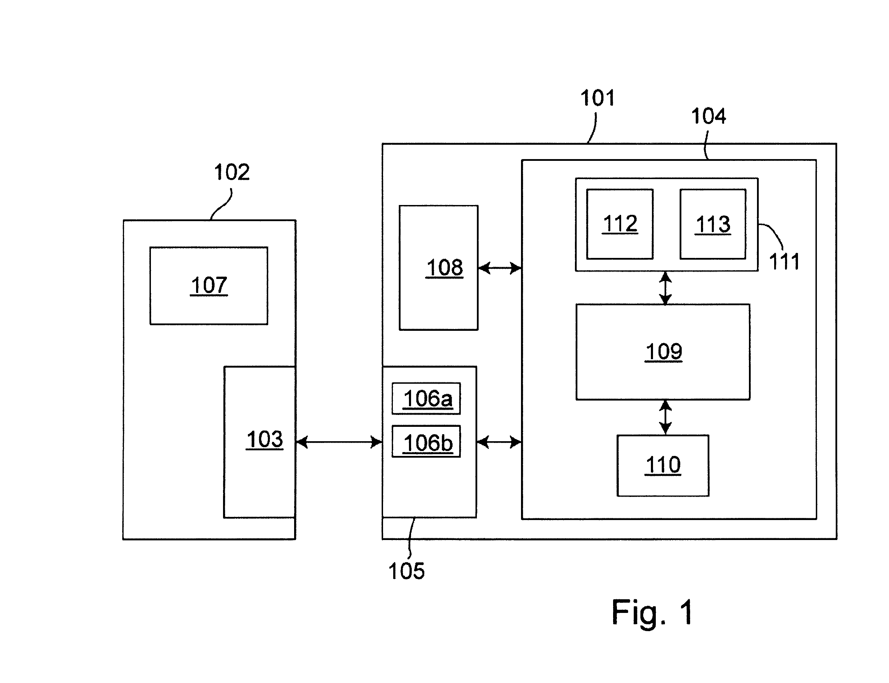

The aforementioned and other aspects of the invention will also be apparent from and elucidated with reference to the embodiments described hereinafter making reference to the drawings. Reference will be made by way of example to the accompanying drawings in which
Fig. 1 shows a schematic block diagram of an IC card according to the invention, which is connected to a host device, and

Figure 1 schematically depicts an IC card 101 that is provided for use in connection with a host device 102 of a user. The IC card 101 is configured according to a standard IC card format and can be inserted into a card reader unit 103 of the host device 102 configured to receive IC cards 101 of the respective standard format. The IC card 101 provides functionality to the host device 102, which can be accessed by the host device 101 during a card session. A card session is a link between the IC card 101 and the host device 102. It is started, when the host device 102 activates the IC card 101, and it ends, when the host device 102 deactivates the card. The start of a card session may be accompanied by a connection of the IC card 101 to a power supply by the host device 102 and, at the end of the card session the IC card 101 may be disconnected from the power supply of the host device 102.

In one embodiment, the host device 102 is a mobile communication device, which may be configured as a cellular phone, a PDA (Personal Data Assistant) or the like. By means of a radio module, which is not shown in figure 1, the mobile communication device can be connected wirelessly to a cellular mobile communication network. For instance, the mobile communication network may be a GSM or a UMTS network. In this embodiment, the IC card 101 may be used in connection with the utilization of a host device 102 in the mobile communication network. In particular, the IC card 101 may comprise a user identification module, which provides secure identification and authentication services to the mobile communication network. If the mobile communication network is a GSM network, the IC card 101 is configured as a SIM card according to the GSM standard comprising a SIM providing the identification and authentication services. If the mobile communication network is a UMTS network, the IC card 101 is configured as a UICC (Universal Integrated Circuit Card) comprising a USIM providing the identification and authentication services to the mobile communication network. However, the IC card 101 may comprise another corresponding module which is used in connection with the operation of a mobile communication device in a mobile communication network.

The IC card 101 comprises a microcontroller 104 that is integrated into the body of the IC card 101. The microcontroller 104 is connected to an electric contact interface 105, which is preferably arranged on the surface of the body of the IC card 101. The contact interface 105 comprises at least two contact elements or contact pads 106a,b for supplying power to the microcontroller 104. One contact element 106a, which is referred to as power terminal hereinafter, may be supplied with an external supply voltage, and the other contact element 106b may be a ground terminal.

Further contact elements or contact pads, which are not shown in figure 1, may be provided for exchanging data between the microcontroller 104 and the host device 102 and for receiving control signals from the host device 102. In particular, the electric contact interface 105 may be configured according to the specification ISO 7816-2. In this embodiment, the electric contact interface 105 comprises eight contact elements usually referred to as C1 to C8. The contact element C1, which is usually designated Vcc, is used for the power supply of the IC card 101 and thus corresponds to the contact element 106a. The contact element C2 is used for providing a reset signal to the microcontroller 104 and the contact element C3 is used for providing a clock signal to the microcontroller 104. The contact element C5 is the ground terminal 106b and, thus, corresponds to the contact element 106b. The contact element C7 is an Input/Output terminal for a data exchange between the IC card 101 and the host device 102. The contact elements C4, C6 and C8 are unused according to ISO specification 7816.

When the IC card 101 is inserted into the card reader unit 103 of the host device 102, the contact interface 105 is contacted by a corresponding contact interface of the card reader unit 103, thereby establishing a power connection and a data connection between the host device 102 and the IC card 101. For providing power to the IC card 101, the power terminal 106a is connected to a power supply unit 107 of the host device 102 via the card reader unit 103. The power supply unit 107 may comprise a battery or may have a connection to a power network, for example. Via the card reader unit 103 a supply voltage is supplied to the power terminal 106a. The supply current of the microcontroller 104 is likewise received via the power terminal 106a.

As depicted in figure 2, the microcontroller 104 includes a primary or main processor (CPU) 109 for executing programs. In different embodiments, the main processor 109 may be an 8-bit, 16-bit or 32-bit processor configured according to a processor architecture known to a person skilled in the art. The main processor 109 is operated using an operating system allowing executing further applications dedicated to specific functionalities of the IC card 101. Optionally, the main processor 109 is supplemented by a coprocessor not shown in figure 2, which is configured to execute predetermined operations in lieu of the main processor 109. In one embodiment, the coprocessor is a cryptographic coprocessor which is configured to execute cryptographic operations, such as encryption and decryption of data and related processes.

Further on, the microcontroller 104 comprises a volatile memory 110, which may be configured as random access memory (RAM). In particular, the volatile memory 110 includes the main memory allocated to the processor 109. The main memory used as stack and heap memory. In addition, the volatile memory 110 is used for at least temporarily storing data elements, which are frequently modified during the operation of the microcontroller 104. In one embodiment, the volatile memory 110 includes two separated memory units, one being used as the main memory of the processor 109 and the other being used for storing frequently modified data elements. In a further embodiment, the microcontroller 104 comprises only one volatile memory unit, which is used as the main memory and for storing frequently modified data elements. Compared to the volatile memory of a conventional IC card, the volatile memory 110 may be enlarged in this embodiment so that additional data elements can be stored therein. It is an advantage of the latter embodiment that the volatile memory 110 can be flexibly split between its two functions.

In addition, the microcontroller 104 comprises a non-volatile memory 111. The non-volatile memory 111 may include a first non-volatile memory unit 112, which may be configured as read only memory (ROM). The first memory unit 112 includes data, which are stored therein at the time of manufacture of the IC card 101, such as routines of the operating system of the IC card 101. Furthermore, a second non-volatile memory unit 113 may be provided, which allows for reading and writing data. The memory unit 113 may be used for storing data, such as, for example, applications executed in the microcontroller 104, and it may be configured as electrical erasable read only memory (EEPROM). In addition or in the alternative to the EEPROM 113, the microcontroller 104 may comprise another non-volatile memory unit allowing reading and writing access. This memory unit may be configured as flash memory (as usual, the EEPROM 113 is to be understood as being a non-flash EEPROM). Both the EEPROM 113 and the flash memory comprise a plurality of memory cells each including a semiconductor element. The cells can be electrically erased and reprogrammed by applying a programming voltage to the cells. Usually, the programming voltage is higher than the supply voltage of the microcontroller 104. Therefore, a DC to DC converter, such as a charge pump or a boost converter, may be integrated into the microcontroller 104 in order to provide the required programming voltage.

The non-volatile memory 111 retains the stored data, when it is not supplied with power. Thus, no data loss occurs when the power connection between the microcontroller 104 and the host device 102 is disconnected, and during an off-state of the microcontroller 104, the data remains stored in the non-volatile memory 111. In contrast thereto, the volatile memory 110 requires power to maintain the stored data. This means that an interruption or termination of the power supply of the volatile memory 110 leads to a loss of the data stored therein. In order to be able to supply the microcontroller 104 and particularly the volatile memory 110 with power, when the external power supply of the IC card 101 by the host device 102 is not available, the IC card 101 comprises a power supply unit 108. Preferably, the power supply unit 108 is integrated into the body of the IC card 101 together with the microcontroller 104 without enlarging the dimensions of the IC card 101, which are determined by the respective standard format. The power supply unit 108 is configured to supply the microcontroller 104 and particular the volatile memory 110 with power. For this purpose, the voltage provided by the power supply unit 108 may correspond to the external supply voltage of the IC card 101 which is provided by the host device 102.

Preferably, the power supply unit 108 is a rechargeable energy storage, which can be charged by connecting it to the power terminal 106a of the IC card 101, while the IC card 101 is supplied with power by the host device 102. In one embodiment, the power supply unit 108 may be a rechargeable battery comprising one or more battery cells. The battery is small and thin enough to be integrated into the body of the IC card 101. For instance, the power supply unit 108 may be a foil battery, a RHISS battery (RHISS: rechargeable hydrogen ion solid state) or a thin-film battery. These types of batteries and their integration into the IC cards 101 are, in general, known to person skilled in the art and will thus not be described in greater detail here. In further embodiments, other rechargeable energy storages, such as, for example, a buffer capacitor, may be used as power supply unit 108.

In particular, if the power supply unit 108 is configured as a rechargeable battery, the charging is controlled by a power management unit of the microcontroller 104, which may comprise a corresponding application executed in the main processor 109 or in another computing unit of the microcontroller 104. Furthermore, a circuitry, which is not shown in the figures, prevents that the power supply unit 108 is discharging via the host device 102 when it is connected to the power terminal 106a in order to be charged.

Data used by the operating system of the IC card 101 and by data processing programs executed in the microcontroller 104 of the IC card 101 are stored in files which are usually called elementary files (EFs). Likewise, data which are used by data processing programs of the host device 102 may be stored in the microcontroller 101 of the IC card 101 in such files. A file can comprise one or more data elements, where a data element corresponds to a single piece of information, such as, for example a parameter, which is accessed by at least one application. As described before, the application may be executed in the IC card 101 or in the host device 101.

In principle, data elements may be stored in the non-volatile memory 111 of the microcontroller 104 and modifications of the data are also made in the non-volatile memory 111. Hence, when a data element is updated, the existing content of a file stored in the non-volatile memory 111 is replaced by new content. However, data elements, which are frequently modified, are stored in the volatile memory 110 instead of the non-volatile memory 111, at least during the execution of the data processing program or programs to which the data elements are allocated, i.e. the data processing program or programs accessing the data elements. Here, a frequently modified data element is to be understood as a data element that is modified with a modification rate that exceeds certain threshold, i.e. a data element for which the number of modifications in a predetermined time interval exceeds a threshold.

If one file comprises a plurality of data elements which are not all frequently modified, the file may be completely stored in the volatile memory 110. However, it is likewise possible that only those data elements included in the file which are modified frequently are stored and modified in the volatile memory 110, while the other data elements that are not frequently modified in the afore mentioned sense are stored and modified in the non-volatile memory 111 in the conventional way.

In one embodiment, the frequently modified data elements are stored permanently in the volatile memory 110. When the IC card 101 is not supplied with power by the host device 102, the volatile memory 110 is powered by the internal power supply unit 108 of the IC card 101. When the external power supply by the host device 102 is available, the volatile memory 110 may be supplied with power via the power terminal 106a and/or by means of the internal power supply unit 108. As described before the power supply unit 108 is charged via the power terminal 106a during a card session, when the IC card 101 is externally supplied with power.

Since the power supply unit 108 usually has a limited capacity, it may be exhausted when it is not charged over a longer period of time. This may happen, when the IC card 101 is disconnected from the host device 102 over a longer period of time, or when the host device 102 is not being activated over a longer period of time. In order to prevent data loss in case of exhaustion of the power supply unit 108, data elements that are stored and modified in the volatile memory 110 may be backed up in the non-volatile memory 111. The backup is controlled by means of a memory management program executed in the microcontroller 104. For backing up the frequently modified data elements stored in the volatile memory 110, the memory management program reads the frequently modified data elements from the volatile memory 110 and stores them in the non-volatile memory 111. From the non-volatile memory 111 the data elements may be restored in the volatile memory 110.

The backup of the frequently modified data elements stored in the volatile memory 110 may be done during each card session. In particular, a copy of the data elements may be stored in the non-volatile memory 111 at the beginning of a card session. Here, the point in time, when a copy of the data elements are being stored in the non-volatile memory 111, may have a predetermined time distance to the activation of the external power supply of the IC card 101, and the time distance may be small enough to ensure that the data is backed up before the external power supply is switched off again. In the further course of the card session, i.e. while the IC card 101 is supplied for the power by the host device 102, further backups of the frequently modified data may be generated in predetermined regular time intervals as long as the external power supply by the host device 102 is available. This allows backing up modifications of the data elements that are made during the card session. However, the frequency of the backups is preferably chosen significantly smaller than the frequency of modifications of the data elements in order to reduce the number of writing processes in the non-volatile memory 111.

As an alternative to the embodiment described before, the microcontroller 104 is configured to determine the state of charge of the power supply unit 108. For this purpose, the memory management program executed in microcontroller 104 may be configured to ascertain predetermined operational characteristics of the power supply unit 108 and to ascertain the state of charge of the power supply unit 108 from the determined operational characteristics. In principle, methods for determining the state of charge of power supply units 108 of different types are known to a person skilled in the art. Such known methods, which will not be described in greater detail here, can be implemented in the memory management program. The memory management program may determine the state of charge of the power supply unit 108 at regular time intervals. During absence of the external power supply by the host device 102, the power for executing the process of determining the state of charge of the power supply unit 108 may be provided to the microcontroller 104 by the power supply unit 108. After having determined the state of charge of the power supply unit 108, the memory management program compares the current state of charge with a predetermined threshold. If it is determined that the state of charge is below the threshold, the frequently modified data stored in the volatile memory 110 are backed up in the non-volatile memory 111. The microcontroller 104 is again powered by means of the power supply unit 108 for executing the backup process. Therefore, the threshold is preferably chosen high enough to be able to provide enough power to the microcontroller 104 for executing the backup process.

After the frequently modified data elements have been deleted from the volatile memory 110 due to an exhaustion of the power supply unit 108, the data elements may be restored in the volatile memory 110. The restoration of the data may be executed by the memory management program upon a start of a card session. After the start of a card session the memory management program may check whether frequently modified data elements have been deleted from the volatile memory 110. If the memory management program determines that frequently modified have been deleted from the volatile memory 110, it accesses the copies of the relevant data elements stored in the non-volatile memory 111. The memory management program than reads the copies of data elements from the non-volatile memory 111 and stores the copies in the volatile memory 110. For determining the data elements to be restored, the memory management program may access a list comprising the frequently modified data elements to be stored in the volatile memory 110. Preferably, this list is stored in the non-volatile memory 111.

When the restoration is done at the beginning of a card session, the frequently modified data elements are available in the volatile memory 110 during the whole card session. However, the data processing program using the frequently modified data elements may not be executed during the whole card session. In this case, the restoration of the frequently modified data and the volatile memory 110 may be done when the respective data processing program is started. As described before, the restoration may be executed by the memory management program of the microcontroller 104. As an alternative, the functionality of the memory management program for restoring data elements in the volatile memory 110, which has been described before, may be implemented in the data processing program.

In a further embodiment, the frequently modified data elements are only temporarily stored in the volatile memory 110 during a card session. When the IC card 101 is not supplied with power by the host device 102, the frequently modified data are not retained in the volatile memory 110. Rather, they are stored in the non-volatile memory 111 until the next card session. In this embodiment, it is not necessary to provide power to the volatile memory 110 or the microcontroller 104, when no card session is executed.

Preferably, the frequently used data elements are copied from the volatile memory 110 to the non-volatile memory 111 after a card session has been terminated. This ensures that the data elements stored in the non-volatile memory 111 include modifications that are made at the end of a card session. However, after the termination of the card session the external power supply of the IC card 101 by the host device 102 may no longer be available so that the microcontroller 104 cannot be supplied with power and by the host device 102 to store the frequently modified data elements in the non-volatile memory 111. In particular, the reason for this is that a card session is usually terminated on the initiative of the host device 102, and the termination of the card session is accompanied by a disconnection of the power supply of the IC card 101 by the host device 102. The termination of the card session may be announced to the IC card 101 but after the notification of the termination there is may not be enough time to copy the frequently modified data elements from the volatile memory 110 to the non-volatile memory. Furthermore, a card session may be terminated unexpectedly, what may be the case, if the user of the host device 102 unexpectedly disconnects the host device 102 from its power source or if the user unexpectedly disconnects in the IC card 101 from the host device 102.

For the aforementioned reasons, the microcontroller 104 is supplied with power by means of the internal power supply unit 108 after the termination of a card session, while the memory management program reads the frequently modified data elements from the volatile memory 110 and stores them in the non-volatile memory 111. After the frequently modified data elements have been stored in the non-volatile memory 111, the microcontroller 104 of the IC card 101 is deactivated. The storing of the frequently modified data elements in the non-volatile memory 111 may be initiated when the IC card 101 is disconnected from the external power supply. Therefore, the power management program may monitor the status of the external power supply of the IC card 101 during a card session and may initiate the storing of the frequently modified data elements in the non-volatile memory 111 when it determines that the external power supply is disconnected.

The frequently modified data elements which have been stored in the non-volatile memory 111 may be restored in the volatile memory 110 at the beginning of the next card session. Therefore, after the IC card 101 has been activated, the memory management program may read the frequently modified data elements in the non-volatile memory 111 and store the data elements in the volatile memory 110 again. For determining the frequently modified data elements, which have to be stored in the volatile memory 110, the memory management program accesses a list which comprises the relevant data elements, the list being stored in the non-volatile memory 111. During the card session, the frequently modified data elements are manipulated in the volatile memory 110 after they have been stored therein by the memory management program. Furthermore, the power supply unit 108 is charged during the card session.

In the embodiment described before, the frequently modified data elements are available in the volatile memory 110 essentially for the whole card session. This is advantageous, if these data elements are used by one or more applications executed in the microcontroller 104 during the whole card session. If a data processing program using a frequently modified data element is not executed during the whole card session, the frequently modified data element may only be stored in the volatile memory 110 while the relevant data processing program is executed. In this case, the functionality of the memory management program for storing the frequently modified data elements in the non-volatile memory 111 and for restoring them in the volatile memory 110 may be implemented in the relevant data processing program. Furthermore, when the data processing program is closed before the card session is terminated, it may not be necessary to supply the microcontroller 104 with power by means of the internal power supply unit 108, when the frequently modified data elements are already stored in the non-volatile memory 111. Rather, the process of storing the relevant data elements in the non-volatile memory 111 may be executed in the normal mode of operation of the microcontroller 104, in which the microcontroller 104 is supplied with power via the power terminal 106a. Thus, the power supply unit 108 can be dispensed with in this case.

The frequently modified data elements may be predetermined based on knowledge about the usual operation of the data processing programs accessing the data in the IC card 101. In this case, the list specifying the relevant data elements may not be modified after it has been stored in the IC card 101. For instance, the list may be installed in the IC card 101 together with the data processing programs using the frequently modified data elements.

In further embodiments, the frequently modified data elements are dynamically determined by the memory management program during the operation of the IC card 101. For this purpose, the memory management program may count the modifications of data elements stored in the non-volatile memory 111 of the IC card 101. If the memory management program determines that the number of modifications of a data element, which are made in a predetermined time interval, exceeds a predetermined threshold, the memory management program categorises the relevant data element as a frequently modified data element, which is treated in a way described before. The modifications may be counted for each data element stored in the non-volatile memory 111. As an alternative, the memory management program may count modifications only for predetermined data elements. These may be data elements for which the rate of modifications may be a high depending on the circumstances under which the IC card 101 is operated. Those data elements may again be specified using knowledge about the usual operation of applications executed in the IC card 101.

As an alternative, the frequently modified data elements may be determined using a model of the operation of a data processing program accessing data stored in the IC card 101. Such a model may be established based on the fact that usually a group of data elements is frequently modified under certain circumstances. Therefore, one or more groups of data elements are specified in the microcontroller 104 and to each group at least one criterion is specified, which is used by the memory management program to judge whether the data elements included the respective group are frequently modified. The criteria may monitored by the memory management program during a card session and the memory management program may classify a group of data elements as frequently modified, if the criterion allocated to the group is fulfilled. The criteria may relate to the predetermined routines executed in the IC card 101, for example, and may be fulfilled when those routines are executed or when the number of executions of the routine within a predetermined time interval exceeds a predetermined threshold.

As described before, the IC card 101 may include an identification module for use in mobile communications and the host device 102 may be configured as a mobile communication device. Examples of data elements, which may be frequently modified by an identification module used are data elements which are related to the configuration of the host device 102 in the mobile communication network. Typically such data elements are modified in so called location update procedures. In particular, these data elements include the elementary file EF_{Kc} comprising a key used for encrypting the communication with the mobile communication network and the elementary file EF_{LOCI} comprising the TMSI (Temporary Mobile Subscriber Identity), the current location area of the host device 101 and the time interval between two regular location updates. Except the time interval between two regular location updates, the aforementioned parameters are modified, when a location update procedure is executed.

Since the configuration of the host device 102 in the mobile communication network may potentially be modified with a high modification rate, they may be predetermined as frequently modified data elements in an identification module card 101. As an alternative, those parameters may be combined in one group of data elements, which are dynamically classified as frequently modified data elements, when the identification module determines that the host device 102 is frequently executing location update procedures. This determination may be made based on a predetermined criterion, which may be fulfilled, when the rate of the execution of certain step in the location update procedure exceeds a predetermined threshold.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage.

Any reference signs in the claims should not be construed as limiting the scope.

## Claims

1. A method for storing data in an IC card (101), which is connectable to a host device (102), the IC card (101) including a microcontroller (104) comprising a memory for storing data elements modified by a data processing program, when the IC card (101) is operated, the memory including at least one non-volatile memory unit (111; 113) and at least one volatile memory unit (110), wherein at least one first data element is determined, which is modified more frequently than at least one second data elements, and wherein the first data element is stored and modified in the volatile memory unit (110) in response to the rate of modifications of the first data element.

2. The method according to claim 1, wherein the second data element is stored and modified in the non-volatile memory unit (111; 113).

3. The method according to one of the preceding claims, wherein the microcontroller (104) can be supplied with power by the host device (102) and wherein the IC card (101) comprises a power supply means (108), the power supply means (108) supplying the volatile memory unit (110) with power, when the power connection to the host device (102) is disconnected.

4. The method according to one of the preceding claims, wherein the power supply means (108) is rechargeable and is charged, while the microcontroller (104) is supplied with power by the host device (102).

5. The method according to one of the preceding claims, wherein the first data element is stored in the non-volatile memory unit (111; 113) in predetermined time intervals.

6. The method according to one of the preceding claims, wherein the state of charge of the power supply means (108) is determined, and wherein the first data element is stored in the non-volatile memory unit (111; 113), when the state of charge is below a predetermined threshold.

7. The method according to one of the preceding claims, wherein the first data element is stored in the non-volatile memory unit (111; 113) in response to a termination of the computer program and/or in response to a termination of the power supply of the microcontroller (104) by the host device (102).

8. The method according to one of the preceding claims, wherein the microcontroller (104) is supplied with power by the power supply means (108), while the first data elements is stored in the non-volatile memory unit (111; 113) after the power supply by the host device (102) has been terminated.

9. The method according to one of the preceding claims, wherein the first data element is read from the non-volatile memory unit (111; 113) and stored in the volatile memory unit (110) in response to a start of the data processing program and/or in response to an activation of the IC card (101) by the host device (102).

10. The method according to one of the preceding claims, wherein the first data element is determined during an operation of the microcontroller (104) by determining a number of modifications of the first data element in a predetermined time interval or by determining a number of events representative of a high modification rate of the first data element.

11. The method according to one of the preceding claims, wherein the IC card (101) comprises a user identification module for identifying and/or authenticating a user in a mobile communication network, the identification module managing data related to the operation of the host device (102) in a cellular mobile communication network.

12. The method according to claim 10, wherein the first data element is related to a configuration of the host device (102) in the mobile communication network.

13. The method according to one of the preceding claims, wherein the volatile memory unit (110) is RAM and wherein the non-volatile memory unit (111; 113) includes EEPROM and/or Flash memory.

14. An IC card (101) comprising a microcontroller (104) with a memory for storing data elements modified by a data processing program, the memory including at least one non-volatile memory unit (111; 113) and at least one volatile memory unit (110), wherein, during operation of the data processing program, at least one first data element is stored and modified in the volatile memory unit (110) and at least one second data element is stored and modified in the non-volatile memory unit (111; 113), the first data element being modified more frequently than the second data element.
